# EUROPEAN PATENT APPLICATION

(11) **EP 1 759 817 A2**
(43) Date of publication of application: **07.03.2007**
(21) Application number: 06018252.4
(22) Date of filing: 31.08.2006
(51) Int. Cl.: B25J 9/16, G05B 19/4069

(54) **Robot monitoring system**

(30) Priority: 01.09.2005 JP 2005253902
(71) Applicant: FANUC LTD, Minamitsuru-gun, Yamanashi 401-0597 (JP)
(72) Inventor: Nagatsuka, Yoshiharu Fanuc Dai3virakaramatsu, Minamitsuru-gun Yamanashi 401-0511 (JP); Kobayashi, Hirohiko, Fujiyoshida-shi Yamanashi 403-0004 (JP)
(74) Representative: Thum, Bernhard

(57) **Abstract**

A robot monitoring system including a robot controller (14) for controlling a robot (12); and an image generating apparatus (18) for generating, based on robot-control related information (D) obtained from the robot controller, a three-dimensional model image (12M,16M) showing the robot and a working environment (16) thereof as a dynamic image corresponding to an actual motion of the robot. The image generating apparatus includes a display-condition setting section (20) for setting a display condition (C) to be changeable corresponding to the actual motion of the robot, the display condition including at least one of a line of sight and a drawing type; and a dynamic-image generating section (22) for generating the dynamic image to be replaceable according to a change, occurring corresponding to the actual motion of the robot, in the display condition. The robot-control related information, obtained from the robot controller, includes an operation program for commanding a certain operation to the robot. A command relating to a change in the display condition is described in the operation program.

## Description

### BACKGROUND OF THE INVENTION

### 1. Field of the Invention

The present invention relates generally to a robot monitoring system and, more particularly, to a robot monitoring system using a three-dimensional model image of a robot.

### 2. Description of the Related Art

A robot, especially an industrial robot, operates according to a certain operation program (or a task program). When several kinds of operation programs are prepared, which correspond to the types of tools (or end effecters) attached to the robot, the types of objective workpieces, the contents of tasks, etc., and are suitably and selectively given to a robot, the robot as a single machine can execute various kinds of tasks. In a manufacturing system using such a robot, it has been proposed that a model image showing a robot and its working environment is displayed in a display unit as a dynamic or time-varying image corresponding to the actual motion of a robot, based on robot-control related information such as operation programs for controlling the robot, so as to enable the operating state of the robot to be simulated or monitored.

For example, Japanese Unexamined Patent Publication (Kokai) No. 2-176906 (JP-A-2-176906) discloses a system in which a plurality of operating devices, including a robot, is displayed as an animation, based on operation programs obtained from the respective operating devices, so as to enable the operating states of the respective operating devices to be simulated.

Also, Japanese Unexamined Patent Publication (Kokai) No. 2001-150373 (JP-A-2001-150373) discloses a configuration in which a computer is connected through communication means to a robot controller and simulates the operating state of a robot on the basis of a robot-operation command transmitted from the robot controller. In this configuration, the computer may also perform monitoring of, e.g., a load applied on each axis of the robot, by successively transmitting data from the robot controller to the computer.

Further, Japanese Unexamined Patent Publication (Kokai) No. 2001-105359 (JP-A-2001-105359) discloses a system in which a three-dimensional model image showing a robot and its working environment is displayed as an animation on a display screen, based on an operation program taught to the robot, so as to enable the operating state of the robot to be simulated, as well as a configuration in which a three-dimensional model image showing the robot and peripheral machinery thereof is readily prepared in the system.

In the conventional robot-operation simulating systems as described above, the three-dimensional model image, generated on the basis of robot-control related information such as an operation program, is displayed on a screen of a display unit, under a uniform or constant display condition with respect to a line of sight, a drawing type, and so on. Therefore, certain problems occurring during an operation of the model image, such as a positional deviation or interference between two components, may not be displayed as an observable image, due to a particular display condition (a line of sight or a drawing type) at the time of occurrence of the problems. In this case, especially when monitoring is performed in order to solve or deal with the problems by observing, as soon as possible, the actual motion of the robot, the detection of the occurrence of problems and the clarification of the cause of the problems may require too much time, which may make it difficult to take a proper countermeasure promptly.

### SUMMARY OF THE INVENTION

It is an object of the present invention to provide a robot monitoring system in which a three-dimensional model image showing a robot and its working environment is generated as a dynamic image corresponding to the actual motion of a robot, based on robot-control related information, so as to enable the operating state of the robot to be monitored, and in which certain operational problems, occurring during the actual motion of a robot, can be accurately and promptly observed irrespective of the time of its occurrence, so as to permit a proper countermeasure to be promptly taken.

To accomplish the above object, the present invention provides a robot monitoring system comprising a robot controller for controlling a robot; and an image generating apparatus for generating, based on robot-control related information obtained from the robot controller, a three-dimensional model image showing the robot and a working environment of the robot as a dynamic image corresponding to an actual motion of the robot; the image generating apparatus comprising a display-condition setting section for setting a display condition in such a manner that it is changeable corresponding to the actual motion of the robot, the display condition including at least one of a line of sight and a drawing type, both defined for representing the dynamic image of the three-dimensional model image; and a dynamic-image generating section for generating the dynamic image in such a manner that it is replaceable according to a change, occurring corresponding to the actual motion of the robot, in the display condition set by the display-condition setting section.

In the above-described robot monitoring system, the display condition, set by the display-condition setting section, may include respective positions of a viewpoint and an object point to be monitored, the viewpoint and the object point defining the line of sight, the positions shifting corresponding to the actual motion of the robot. In this case, the dynamic-image generating section may generate the dynamic image based on the line of sight changing due to a shift in the respective positions of the viewpoint and the object point to be monitored.

The above robot monitoring system may further comprise a storage section for storing a set value of a position of the viewpoint and a set value of a position of the object point to be monitored, in a manner correlated to each other and together with an index representing the respective positions, with regard to each of a plurality of different lines of sight. The storage section may be provided in either one of the robot controller and the image generating apparatus.

The display condition, set by the display-condition setting section, may include a wire-frame type and a solid type, both constituting the drawing type. In this case, the dynamic-image generating section may generate the dynamic image, based on the drawing type, changed between the wire-frame type and the solid type, corresponding to the actual motion of the robot.

The above robot monitoring system may further comprise a storage section for storing the drawing type, changeable between the wire-frame type and the solid type, corresponding to the actual motion of the robot, together with an index representing the contents of the actual motion, with regard to each of a plurality of objects included in the three-dimensional model image. The storage section may be provided in any one of the robot controller and the image generating apparatus.

Also, the display condition, set by the display-condition setting section, may include a position of a tool center point of the robot, the position shifting corresponding to the actual motion of the robot, and a uniform relative positional relationship between a viewpoint and an object point to be monitored, the viewpoint and the object point defining the line of sight, the object point comprising the tool center point. In this case, the dynamic-image generating section may generate the dynamic image, based on the line of sight changing due to a shift in the viewpoint and the object point while keeping the relative positional relationship.

Also, the display condition, set by the display-condition setting section, may include a position of a tool center point of the robot, the position shifting corresponding to the actual motion of the robot, and a wire-frame type and a solid type, both constituting the drawing type. In this case, the dynamic-image generating section may generate the dynamic image, based on the drawing type changed between the wire-frame type and the solid type, corresponding to a shift in the tool center point.

The robot-control related information, obtained by the image generating apparatus from the robot controller, may include an operation program for commanding a certain operation to the robot. In this case, a command relating to a change in the display condition is described in the operation program.

In the above robot monitoring system, the robot controller and the image generating apparatus may be connected, through a communication network, to each other.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a functional block diagram showing a basic configuration of a robot monitoring system according to the present invention;
Fig. 2 is an illustration schematically showing a robot monitoring system according to an embodiment of the present invention, which has the basic configuration of Fig. 1;
Fig. 3 is an illustration schematically showing a procedure for changing a display condition, in the robot monitoring system of Fig. 2; and
Fig. 4 is an illustration showing an exemplary drawing type, in the robot monitoring system of Fig. 3.

### DETAILED DESCRIPTION

The embodiments of the present invention are described below, in detail, with reference to the accompanying drawings. In the drawings, the same or similar components are denoted by common reference numerals.

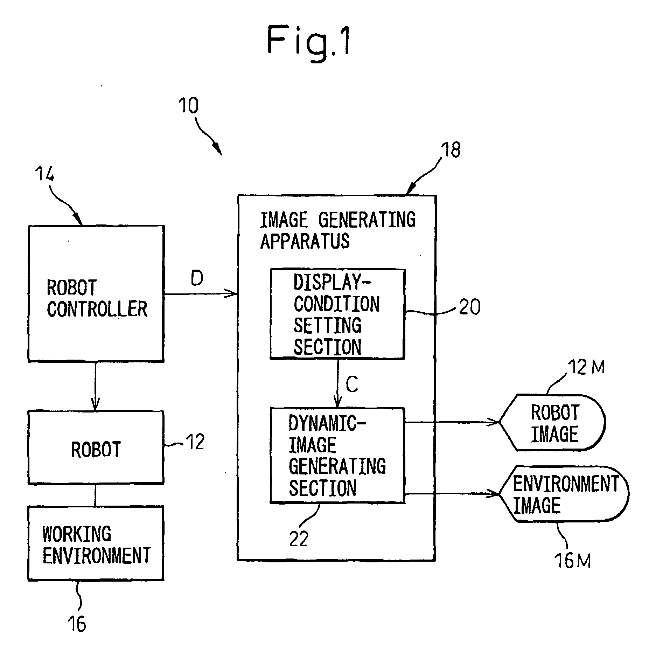

Referring to the drawings, Fig. 1 shows, in a functional block diagram, a basic configuration of a robot monitoring system 10 according to the present invention. The robot monitoring system 10 includes a robot controller or control device 14 for controlling a robot 12, and an image generating apparatus 18 for generating a three-dimensional model images 12M, 16M showing the robot 12 and a working environment 16 of the robot 12, as a dynamic or time-varying image corresponding to an actual motion of the robot 12, on the basis of robot-control related information D obtained from the robot controller 14. The image generating apparatus 18 includes a display-condition setting section 20 for setting a display condition C in such a manner that it can be changed corresponding to the actual motion of the robot 12, the display condition C including at least one of a line of sight and a drawing type, both defined for representing the dynamic image of the three-dimensional model images 12M, 16M, and a dynamic-image generating section 22 for generating the dynamic image of the three-dimensional model images 12M, 16M in a manner as to be replaceable according to a change, occurring corresponding to the actual motion of the robot 12, in the display condition C set by the display-condition setting section 20.

In the robot monitoring system 10 having the configuration as described above, the image generating apparatus 18 generates the dynamic image of the three-dimensional model images 12M, 16M showing the robot 12 and the working environment 16, under the display condition C that can be changed correspondingly to the actual motion of the robot 12, on the basis of the robot-control related information D such as an operation program for controlling the robot 12 or a command value described in the operation program. Therefore, when one or more regions to be preferentially monitored, where a problem such as a positional deviation or interference between two components is likely to occur, is previously determined, during the actual motion performed by the robot 12 in accordance with the operation program, and the display condition C for displaying the preferentially monitored region is set while suitably changing the content (a line of sight or a drawing type) thereof to be optimal for clarifying the problem, it is possible to reliably display an image showing the occurrence of the problem, which is observable in the dynamic image of the three-dimensional model images 12M, 16M. Thus, according to the robot monitoring system 10, certain operational problems, occurring during the actual motion of the robot 12, can be accurately and promptly observed irrespective of the time of occurrence of the problems and, therefore, it is possible to perform the detection of the occurrence of the problems and the clarification of the cause of the problems in a shorter time, and thus to promptly take a proper countermeasure.

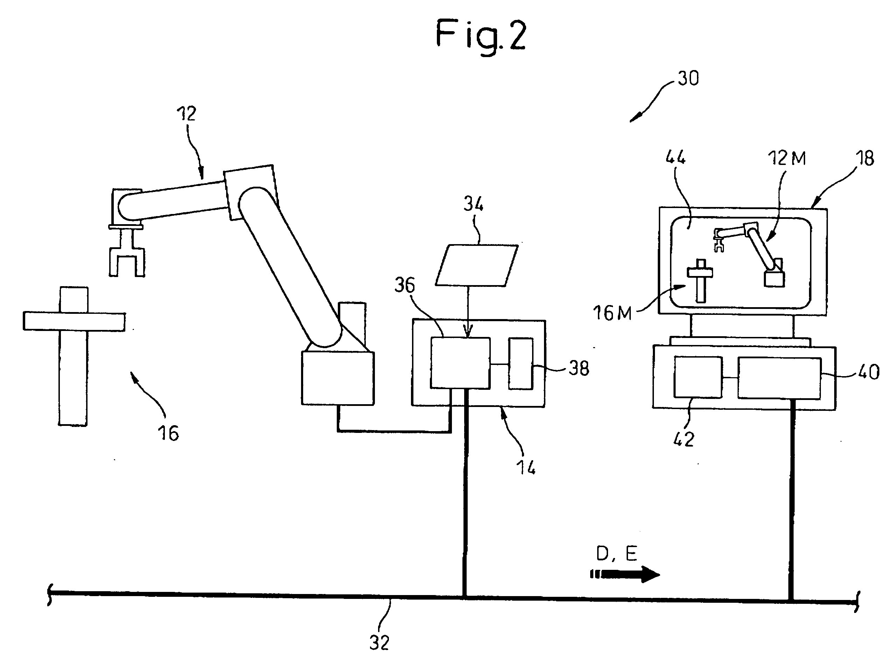

Fig. 2 schematically shows a robot monitoring system 30 according to an embodiment of the present invention. The robot monitoring system 30 has the basic configuration as described with reference to the robot monitoring system 10 of Fig. 1, and thus the corresponding components are denoted by common reference numerals and the explanation thereof is not repeated.

In the robot monitoring system 30, the robot controller 14 and the image generating apparatus 18 are connected to each other through a communication network 32 such as an Ethernet®. The robot controller 14 includes a processing section (or a CPU) 36 for commanding a certain task to the robot 12 in accordance with an operation program 34, and a storage section 38 having either built-in or external configuration. In this connection, the robot-control related information D obtained by the image generating apparatus 18 from the robot controller 14 is mainly derived from the description of the operation program 34. Besides, the operation program 34 includes a command E described therein, which instructs a change in the display condition C (Fig. 1). Therefore, in accordance with the robot-control related information D and the command E obtained from the robot controller 14, the image generating apparatus 18 generates the dynamic image of the three-dimensional model images 12M, 16M showing the robot 12 and the working environment 16, and suitably changes the display condition C (Fig. 1) required for generating the dynamic image.

According to the above configuration, simultaneously with the operation of the robot controller 14 to execute the operation program 34 to control the robot 12, the image generating apparatus 18 allows the three-dimensional model images 12M, 16M showing the robot 12 and the working environment 16 to be displayed as the dynamic image that has been suitably replaced or regenerated according to the optimization of the display condition C, in accordance with the same operation program 34. Thus, the entire configuration of the control of the robot monitoring system 30 may be simplified. Further, the provision of the communication network 32 makes it possible to easily incorporate the robot controller 14 and the image generating apparatus 18 into a variety of manufacturing systems.

The image generating apparatus 18 includes a processing section (or a CPU) 40 having the functions of the display-condition setting section 20 (Fig. 1) and dynamic-image generating section 22 (Fig. 1), a storage section 42 having either a built-in or an external configuration, and a display screen 44. The processing section 40 generates the dynamic image of the three-dimensional model images 12M, 16M showing the robot 12 and the working environment 16, in accordance with the robot-control related information D and the command E, and permits the dynamic image to be displayed on the display screen 44. The display condition C set by the processing section 40 (Fig. 1) is stored in the storage section 42. In this connection, the display condition C (Fig. 1) may also be stored in the storage section 38 of the robot controller 14.

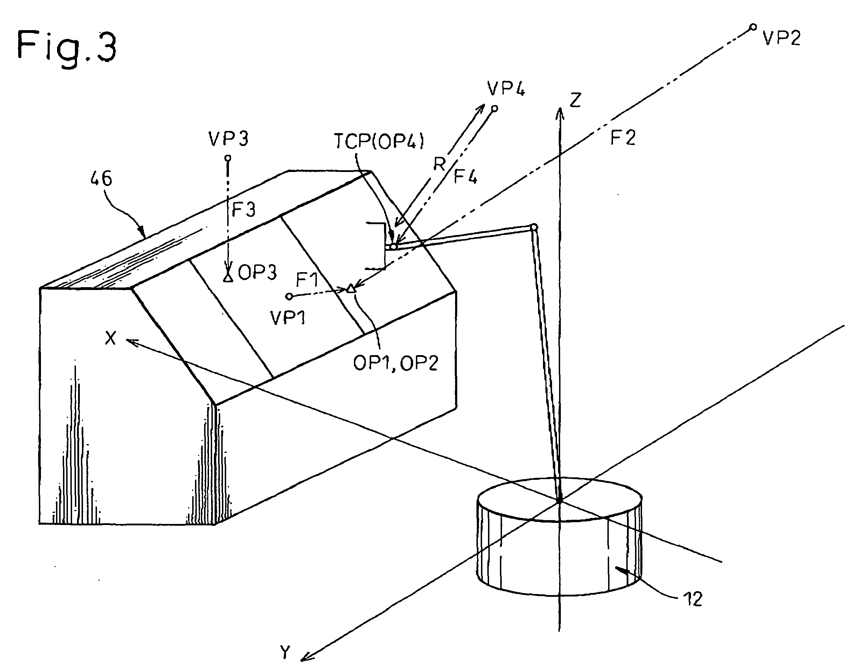

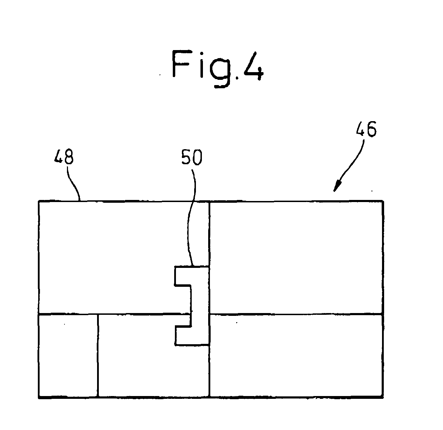

Referring now to Figs. 3 and 4, a display-condition setting process and a dynamic-image generating process, executed by the processing section 40 (i.e., the display-condition setting section 20 and the dynamic-image generating section 22) of the image generating apparatus 18 in the robot monitoring system 30 having the above-described configuration, will be described below by way of example. In the illustrated example as shown in Fig. 3, it is assumed that the image generating apparatus 18 monitors the handling operation of the robot 12 for attaching a workpiece (not shown) to, or detaching it from, a chuck (not shown) of a processing machine 46.

In a first example of the display-condition setting process and the dynamic-image generating process, executed by the processing section 40, the display condition C set by the display-condition setting section 20 (Fig. 1) may include respective positions (as coordinates) of a viewpoint VP and an object point to be monitored OP, wherein the viewpoint and the object point define the line of sight F representing the dynamic image displayed on the display screen 44, and wherein the positions of the viewpoint and the object point shift correspondingly to the actual motion of the robot 12. In this configuration, the dynamic-image generating section 22 (Fig. 1) generates the dynamic image on the basis of the line of sight F that changes due to a shift in the respective positions of the viewpoint VP and the object point to be monitored OP. In Fig. 3, the first to third viewpoints VP1 - VP3 (denoted by O), the corresponding first to third object points to be monitored OP1 - OP3 (denoted by Δ), and the dependent first to third lines of sight F1 - F3 (denoted by two-dot chain lines) are illustrated.

In the illustrated configuration, an operator sets, for example, the object points to be monitored OP1 - OP3 as the representative points of the above-described preferentially monitored regions, and also sets the viewpoints VP1 - VP3 to obtain the lines of sight F1 - F3 for clearly displaying the object points to be monitored OP1 - OP3. The operator can perform the above setting process by inputting the positions (as coordinates) of each viewpoint VP and each object point OP into the image generating apparatus 18. In this case, the operator can input the position (as coordinates) of each point by manipulating an input device, such as a mouse, so as to indicate the points corresponding to the desired viewpoint and object point to be monitored, on the display screen 44 displaying the robot 12 and the processing machine 46.

Thus, the image generating apparatus 18 operates to set the viewpoints VP and the object points to be monitored OP, correspondingly to the actual motion of the robot 12, and thereby allows the three-dimensional model images 12M, 16M showing the robot 12 and the working environment 16 to be displayed as the dynamic image that has been suitably replaced or regenerated according to the optimization of the line of sight, following the previous setting, for enabling the desired region (e.g., the preferentially monitored region) to be clearly displayed.

After the setting of the respective points has been completed, the processing section 40 operates, due to, e.g., the input of command performed by an operator, to make the storage section 42 (or the storage section 38 of the robot controller 14) store the set values (or coordinate values) of positions of the viewpoints VP1 - VP3 and the set values (or coordinate values) of positions of the object points to be monitored OP1 - OP3, in a manner correlated to each other and together with indices representing the respective positions, in regard respectively to a plurality of different lines of sight F1 - F3. An example of the setting particulars is shown by Table 1 below.

**[Table 1]**

| No. | Name | Position of viewpoint | | | Position of object point | | |
|---|---|---|---|---|---|---|---|
| | | X | Y | Z | X | Y | Z |
| 1 | Robot Left | 200 mm | 1500 mm | 1500 mm | 1000 mm | 0 mm | 1100 mm |
| 2 | Robot Right | 200 mm | -1500 mm | 1500 mm | 1000 mm | 0 mm | 1100 mm |
| 3 | Machine On | 1500 mm | 0 mm | 1700 mm | 1500 mm | 0 mm | 1000 mm |

In the above example, the set positions of viewpoint VP1 and object point to be monitored OP1, which define the line of sight F1, are stored as the coordinate values in a machine coordinate system (Fig. 3), together with the indices as number "1" and name "Robot Left" appended to the coordinate values. In the same way, the set positions (or coordinate values) of viewpoint VP2 and object point to be monitored OP2, which define the line of sight F2, are stored together with the indices as number "2" and name "Robot Right", and the set positions (or coordinate values) of viewpoint VP3 and object point to be monitored OP3, which define the line of sight F3, are stored together with the indices as number "3" and name "Machine On". According to this configuration, it is possible for the robot controller 14 to readily command the designation and change of the line of sight F to the image generating apparatus 18, by describing either one of the indices as "number" and "name" into the operation program 34.

In a second example of the display-condition setting process and the dynamic-image generating process, executed by the processing section 40, the display condition C set by the display-condition setting section 20 (Fig. 1) may include a wire-frame type and a solid type, both constituting a drawing type of the dynamic image displayed on the display screen 44. In this configuration, the dynamic-image generating section 22 (Fig. 1) generates the dynamic image on the basis of the drawing type changed between the wire-frame type and the solid type correspondingly to the actual motion of the robot 12. Fig. 4 shows, by way of example, a housing 48 of the processing machine 46, diagrammed by the wire-frame type, and a chuck 50 of the processing machine 46, diagrammed by the solid type.

In the illustrated configuration, an operator suitably selects and sets the drawing type required for clearly displaying, for example, the above-described preferentially monitored region, depending on the situation of the actual motion of the robot 12, with regard, respectively, to a plurality of objects included in the three-dimensional model images displayed on the display screen 44. The operator can perform the above setting process by designating and inputting the drawing type for representing the robot 12 and the working environment 16 (or the processing machine 46) into the image generating apparatus 18. In this case, the operator can input the drawing type for the robot 12 and/or various components of the processing machine 46 by manipulating an input device, such as a mouse, while viewing the display screen 44.

Thus, the image generating apparatus 18 operates to previously select and set either one of the wire-frame type and the solid type, corresponding to the actual motion of the robot 12, and thereby allows the three-dimensional image of the robot 12 and the working environment 16 to be displayed as the dynamic image that has been suitably replaced or regenerated according to the optimization of the drawing type, following the previous setting, to enable the desired region (e.g., the preferentially monitored region) to be clearly displayed.

After the setting of the drawing type has been completed, the processing section 40 operates, due to, e.g., the input of command performed by an operator, to make the storage section 42 (or the storage section 38 of the robot controller 14) store the drawing types changed between the wire-frame types and the solid types correspondingly to the actual motion of the robot 12, together with indices representing the contents of the actual motion, in regard respectively to a plurality of objects included in the three-dimensional model images, such as the robot 12 and/or various components of the processing machine 46. An example of the setting particulars is shown by Table 2 below.

**[Table 2]**

| No. | Name | Housing | Chuck |
|---|---|---|---|
| 1 | Before Machining | Solid | Solid |
| 2 | During Machining | Wire Frame | Solid |
| 3 | After Machining | Solid | Solid |

In the above Example, the drawing types for the housing 48 and the chuck 50 at a stage before starting the processing work of the processing machine 46 are stored as the solid types, together with indices such as the number "1" and the name "Before Machining". In the same way, the drawing types for the housing 48 and the chuck 50 at a stage during the execution of the processing work are stored as the wire-frame type for the former and the solid type for the latter, together with indices such as the number "2" and the name "During Machining", and the drawing types for the housing 48 and the chuck 50 at a stage after completing the processing work are stored as the solid types, together with the indices as number "3" and name "After Machining". According to this configuration, it is possible for the robot controller 14 to readily command the designation and change of the drawing type to the image generating apparatus 18, by describing either one of the indices as "number" and "name" into the operation program 34.

The above first and second examples of the display-condition setting process and the dynamic-image generating process, executed by the processing section 40, can be employed either separately or in combination with each other.

Corresponding to the above-described setting particulars of the display conditions C (Fig. 1) input by the operator, the operation program 34 (Fig. 2) can be prepared, for example, as follows (the left-end numeral represents the line number).
1: MONITOR CHANGE VIEW ROBOT RIGHT
2: MONITOR CHANGE DRAWING TYPE BEFORE MACHINING
3: MOVE J P[1]
4: MOVE L P[2]
5: MONITOR CHANGE VIEW MACHINE ON
6: MONITOR CHANGE DRAWING TYPE DURING MACHINING (6': MONITOR CHANGE DRAWING TYPE MACHINE=WIRE)
7: MOVE L P[3]
8: MOVE L P[4]
9: MOVE L P[5]
10: MONITOR CHANGE VIEW ROBOT LEFT
11: MONITOR CHANGE DRAWING TYPE AFTER MACHINING
12: MOVE L P[6]
13: MOVE L P[7]
14: MOVE L P[8]
15: MOVE L P[9]
16: MOVE J P[1]

The above operation program will be described below. Line 1 commands that the position of the viewpoint and the position of the object point to be monitored are set to "Robot Right" in the image processing apparatus 18. Line 2 commands that the drawing type is set to "Before Machining" in the image processing apparatus 18. Line 3 commands that the robot 12 operates, by a respective-axes or jog operation, to move an arm to the position P[1]. Line 4 commands that the robot 12 operates, by a linear path control, to move the arm to the position P[2]. These arm motions are displayed, in the image processing apparatus 18, as a dynamic image of the solid type observed along the line of sight F2.

Line 5 commands that the position of the viewpoint and the position of the object point to be monitored are changed to "Machine On" in the image processing apparatus 18. Line 6 commands that the drawing type is changed to "During Machining" in the image processing apparatus 18. Line 7 commands that the robot 12 operates, by the linear path control, to move the arm to position P[3]. Line 8 commands that the robot 12 operates, by the linear path control, to move the arm to position P[4]. Line 9 commands that the robot 12 operates, by the linear path control, to move the arm to position P[5]. These arm motions are displayed, in the image processing apparatus 18, as a dynamic image of the wire-frame type (for the housing 48) and of the solid type (for the chuck 50) observed along the line of sight F3.

Line 10 commands that the position of the viewpoint and the position of the object point to be monitored are changed to "Robot Left" in the image processing apparatus 18. Line 11 commands that the drawing type is changed to "After Machining" in the image processing apparatus 18. Line 12 commands that the robot 12 operates, by the linear path control, to move the arm to position P[6]. Line 13 commands that the robot 12 operates, by the linear path control, to move the arm to position P[7]. Line 14 commands that the robot 12 operates, by the linear path control, to move the arm to position P[8]. Line 15 commands that the robot 12 operates, by the linear path control, to move the arm to position P[9]. Line 16 commands that the robot 12 operates, by the respective-axes or jog operation, to move the arm to position P[1]. These arm motions are displayed, in the image processing apparatus 18, as a dynamic image of the solid type observed along the line of sight F1.

In the above operation program 34, "number" may be described in place of "name", as an index, in lines 1, 5, 10 for commanding the change in the line of sight. Alternatively, other arguments may be used to directly describe the set values (or coordinate values) of the positions. In the same way, "number" may be described in place of "name", as an index, in lines 2, 6, 11 for commanding the change in the drawing type. Alternatively, other arguments may be used to directly describe the names of objects and the drawing types (see the line 6').

When the above operation program 34 is executed by the robot controller 14, the robot 12 operates under the control of the program and, in parallel with the robot operation (preferably in a real time), the image generating apparatus 18 operates to display the three-dimensional images of the robot 12 and the working environment 16 (or the processing machine 46) as a dynamic image that has been suitably replaced or regenerated according to the optimization of the display condition for enabling the predetermined preferentially monitored region (including the interior of the processing machine 46) to be clearly displayed. Therefore, it is possible to positively change the dynamic image to be displayed so as to match the operating state of the robot 12, and to easily monitor the current state of the robot 12 and working environment 16. This advantage is also given in a case where the robot 12 enters into the interior of a processing machine 46 to execute a task. As a result, even if certain problems occur with respect to, for example, the operation of the robot 12 on the task performed in the interior of the processing machine, it is possible to readily observe the current state of the robot 12 and the interior of the processing machine 46, and thereby to promptly clarify the cause of the occurrence of a problem.

In a third example of the display-condition setting process and the dynamic-image generating process, executed by the processing section 40, the display condition C set by the display-condition setting section 20 (Fig. 1) may include a position of a tool center point TCP (Fig. 3) of the robot 12, which shifts correspondingly to the actual motion of the robot, and a uniform or constant relative positional relationship R between the viewpoint VP and the object point to be monitored OP, which define the line of sight F of the dynamic image displayed on the display screen 44, provided that the object point OP comprises the tool center point TCP. In this case, the dynamic-image generating section 22 (Fig. 1) generates a dynamic image on the basis of the line of sight F changing due to the shift in the viewpoint VP and the object point OP under the uniform relative positional relationship R. In Fig. 3, the object point to be monitored OP4 comprising the tool center point TCP, the viewpoint VP4 defined with the relative positional relationship R relative to the object point OP4, and the line of sight F4 determined by these points are illustrated by way of example.

Thus, the image generating apparatus 18 allows, corresponding to the actual motion of the robot 12, three-dimensional images of the robot 12 and the working environment 16 to be displayed as a dynamic image that has been automatically replaced or regenerated according to the optimization of the line of sight F for enabling a certain region around the tool center point TCP to be clearly displayed.

In the above configuration, the display-condition setting section 20 may obtain the positional information of the tool center point TCP, as a control reference point, from the robot controller 14. In this arrangement, it is possible to accurately recognize the shifting state of the tool center point TCP in the actual motion of the robot 12. The uniform relative positional relationship R between the viewpoint VP and the object point to be monitored OP may be previously set and input by an operator, and may be stored in the storage section 42 (or the storage section 38 of the robot controller 14). The processing section 40 continuously obtains the positional information of the tool center point TCP at suitable intervals (e.g., interpolation periods) from the robot controller 14, and determines, based on the uniform relative positional relationship R previously set, the position of the viewpoint VP shifted to follow the tool center point TCP, so as to determine the line of sight F. Thus, the operating state of a certain region around the tool center point TCP of the robot 12 can be always displayed as a dynamic image on the display screen 44 of the image generating apparatus 18.

In a fourth Example of the display-condition setting process and the dynamic-image generating process, executed by the processing section 40, the display condition C set by the display-condition setting section 20 (Fig. 1) may include a position of a tool center point TCP of the robot 12, which shifts correspondingly to the actual motion of the robot, and a wire-frame type and a solid type, both constituting the drawing type of the dynamic image displayed on the display screen 44. In this case, the dynamic-image generating section 22 (Fig. 1) generates a dynamic image on the basis of the drawing type changed between the wire-frame type and the solid type correspondingly to a shift in the tool center point TCP (see Fig. 4).

Thus, the image generating apparatus 18 allows, corresponding to the actual motion of the robot 12, the three-dimensional images of the robot 12 and the working environment 16 to be displayed as the dynamic image that has been automatically replaced or regenerated according to the optimization of the drawing type for enabling a certain region around the tool center point TCP to be clearly displayed.

In the above configuration, the display-condition setting section 20 may obtain the positional information of the tool center point TCP from the robot controller 14. In this arrangement, it is possible to accurately recognize the shifting state of the tool center point TCP in the actual motion of the robot 12. The range of shifting of the tool center point TCP within which the drawing type is necessarily changed between the wire-frame type and the solid type, with respect to the robot 12 and the various components of the working environment 16 (or the processing machine 46) may be previously set and input by an operator, and may be stored in the storage section 42 (or the storage section 38 of the robot controller 14). The processing section 40 continuously obtains the positional information of the tool center point TCP continuously at suitable intervals (e.g., interpolation periods) from the robot controller 14, and determines, based on the range of shifting of the tool center point TCP as being previously set, the drawing type for representing each component. Thus, even when the robot 12 operates to perform a task in the interior of the processing machine 46, the operating state of a certain region around the tool center point TCP of the robot 12 can be always displayed as a dynamic image on the display screen 44 of the image generating apparatus 18.

The above third and fourth examples of the display-condition setting process and the dynamic-image generating process, executed by the processing section 40, can be employed either separately or in combination with each other.

Corresponding to the above-described setting particulars of the display conditions C (Fig. 1) input by the operator, the operation program 34 (Fig. 2) can be prepared, for example, as follows (the left-end numeral represents the line number).
1: MOVE J P[1]
2: MONITOR TRACK START
3: MOVE L P[2]
4: MOVE L P[3]
5: MOVE L P[4]
6: MOVE L P[5]
7: MONITOR TRACK END
8: MOVE L P[6]
9: MOVE L P[7]
10: MOVE J P[1]

The above operation program will be described below. Line 1 commands that the robot 12 operates, by a respective-axes or jog operation, to move an arm to the position P[1]. Line 2 commands that the display of a dynamic image, in which the viewpoint VP shifts to follow the shifting of the tool center point TCP, is started in the image processing apparatus 18. Line 3 commands that the robot 12 operates, by a linear path control, to move the arm to the position P[2]. Line 4 commands that the robot 12 operates, by the linear path control, to move the arm to the position P[3]. Line 5 commands that the robot 12 operates, by the linear path control, to move the arm to the position P[4]. Line 6 commands that the robot 12 operates, by the linear path control, to move the arm to the position P[5]. These arm motions are displayed, in the image processing apparatus 18, as a dynamic image of the region around the tool center point TCP.

Line 7 commands that the display of the dynamic image, in which the viewpoint VP shifts to follow the shifting of the tool center point TCP, is finished in the image processing apparatus 18. Line 8 commands that the robot 12 operates, by the linear path control, to move the arm to the position P[6]. Line 9 commands that the robot 12 operates, by the linear path control, to move the arm to the position P[7]. Line 10 commands that the robot 12 operates, by the respective-axes or jog operation, to move the arm to the position P[1]. These arm motions are displayed, in the image processing apparatus 18, as a dynamic image independent of the shift of the tool center point TCP.

In the above operation program 34, a certain argument may be used to describe the previously set relative positional relationship R between the tool center point TCP and the viewpoint VP, as a command to the image generating apparatus 18, in the line 2 for commanding the start of monitor tracking.

When the above operation program 34 is executed by the robot controller 14, the robot 12 operates under the control of the program, and in parallel with the robot operation (preferably in a real time), the image generating apparatus 18 operates to display the three-dimensional image of the robot 12 and the working environment 16 (or the processing machine 46) as the dynamic image that has been suitably replaced or regenerated according to the optimized display condition (i.e., the line of sight and/or the drawing type) that is changed corresponding to the shifting of the tool center point TCP so as to enable the predetermined preferentially monitored region (including the interior of the processing machine 46) to be clearly displayed. According to this configuration, the same operative effects as those according to the examples 1 and 2 can be obtained.

While the invention has been described with reference to specific preferred embodiments, it will be understood, by those skilled in the art, that various changes and modifications may be made thereto without departing from the scope of the following claims.

## Claims

1. A robot monitoring system comprising a robot controller (14) for controlling a robot (12), and an image generating apparatus (18) for generating, based on robot-control related information (D) obtained from said robot controller, a three-dimensional model image (12M, 16M) showing the robot and a working environment (16) of the robot as a dynamic image corresponding to an actual motion of the robot, **characterized in that**:
said image generating apparatus comprises:
a display-condition setting section (20) for setting a display condition (C) in a manner as to be changeable corresponding to the actual motion of the robot, said display condition including at least one of a line of sight and a drawing type, both defined for representing said dynamic image of said three-dimensional model image; and
a dynamic-image generating section (22) for generating said dynamic image in a manner as to be replaceable according to a change, occurring corresponding to the actual motion of the robot, in said display condition set by said display-condition setting section.

2. A robot monitoring system as set forth in claim 1, wherein said display condition, set by said display-condition setting section, includes respective positions of a viewpoint (VP) and an object point to be monitored (OP), said viewpoint and said object point defining said line of sight (F), said positions shifting corresponding to the actual motion of the robot; and wherein said dynamic-image generating section generates said dynamic image, based on said line of sight changing due to a shift in said respective positions of said viewpoint and said object point to be monitored.

3. A robot monitoring system as set forth in claim 2, further comprising a storage section (42) for storing a set value of a position of said viewpoint and a set value of a position of said object point to be monitored, in a manner correlated to each other and together with an index representing said respective positions, in regard to each of a plurality of different lines of sight; said storage section being provided in either one of said robot controller and said image generating apparatus.

4. A robot monitoring system as set forth in claim 1, wherein said display condition, set by said display-condition setting section, includes a wire-frame type and a solid type, both constituting said drawing type; and wherein said dynamic-image generating section generates said dynamic image, based on said drawing type changed between said wire-frame type and said solid type corresponding to the actual motion of the robot.

5. A robot monitoring system as set forth in claim 4, further comprising a storage section (42) for storing said drawing type changeable between said wire-frame type and said solid type corresponding to the actual motion of the robot, together with an index representing contents of the actual motion, in regard to each of a plurality of objects included in said three-dimensional model image; said storage section being provided in either one of said robot controller and said image generating apparatus.

6. A robot monitoring system as set forth in claim 1, wherein said display condition, set by said display-condition setting section, includes a position of a tool center point (TCP) of the robot, said position shifting corresponding to the actual motion of the robot, and a uniform relative positional relationship (R) between a viewpoint (VP) and an object point to be monitored (OP), said viewpoint and said object point defining said line of sight (F), said object point comprising said tool center point; and wherein said dynamic-image generating section generates said dynamic image, based on said line of sight changing due to a shift in said viewpoint and said object point while keeping said relative positional relationship.

7. A robot monitoring system as set forth in claim 6, wherein said display-condition setting section obtains positional information of said tool center point from said robot controller.

8. A robot monitoring system as set forth in claim 1, wherein said display condition, set by said display-condition setting section, includes a position of a tool center point (TCP) of the robot, said position shifting corresponding to the actual motion of the robot, and a wire-frame type and a solid type, both constituting said drawing type; and wherein said dynamic-image generating section generates said dynamic image, based on said drawing type changed between said wire-frame type and said solid type corresponding to a shift in said tool center point.

9. A robot monitoring system as set forth in claim 8, wherein said display-condition setting section obtains positional information of said tool center point from said robot controller.

10. A robot monitoring system as set forth in claim 1, wherein said robot-control related information, obtained by said image generating apparatus from said robot controller, includes an operation program (34) for commanding a certain operation to the robot; a command (E) relating to a change in said display condition being described in said operation program.

11. A robot monitoring system as set forth in any one of claims 1 to 10, wherein said robot controller and said image generating apparatus are connected, through a communication network (32), to each other.
